# EUROPEAN PATENT APPLICATION

(11) **EP 3 088 066 A1**
(43) Date of publication of application: **02.11.2016**
(21) Application number: 14874970.8
(22) Date of filing: 22.12.2014
(51) Int. Cl.: B01D 33/06, B63B 13/00, C02F 1/32, C02F 1/461

(54) **FILTRATION DEVICE, BALLAST WATER TREATMENT METHOD, AND BALLAST WATER TREATMENT DEVICE USING SAID FILTRATION DEVICE**

(30) Priority: 27.12.2013 JP 2013270607
(71) Applicant: Sumitomo Electric Industries, Ltd., Osaka-shi, Osaka 541-0041 (JP)
(72) Inventor: KANAZAWA, Shinichi, Osaka-shi Osaka 554-0024 (JP); OZAWA, Isao, Osaka-shi Osaka 554-0024 (JP)
(74) Representative: Boult Wade Tennant
(86) International application number: PCT/JP2014/083855
(87) International publication number: WO 2015/098808

(57) **Abstract**

A filtering device includes, as a filter membrane, a pleated filter formed of a filter base having folds so as to repeat peak portions and valley portions, the pleated filter having a shape of a cylinder whose axial direction is a ridge line direction of the folds. In the filtering device, the pleated filter is rotatable about a cylindrical axis of the shape of the cylinder. The filtering device includes a nozzle that is provided so as to face an outer circumferential surface of the pleated filter and that ejects a liquid toward the outer circumferential surface. The relationships 4p ≤ W, and h/5 ≤ L ≤ h/2 are satisfied, where p represents a spacing between pleats and h represents a length in the ridge line direction, the length being effective for filtration, in the folds on the outer circumferential side of the pleated filter, and W represents an opening width in a direction perpendicular to the ridge line direction and L represents an opening length in the ridge line direction in an opening portion of the nozzle.

## Description

### Technical Field

The present invention relates to a structure of a filtering device including, as a filter membrane, a pleated filter that is mainly used for filtration of a liquid. In particular, the present invention relates to a pleated filter used in a treatment system of ballast water stored in ships and used for filtration of a large amount of water, and an apparatus using the same.

### Background Art

A wide variety of filters are used for the purpose of separating and removing a solid which is a contaminant from a gas or a liquid. Pleated filters whose filtration areas are increased by folding a filter so as to have a pleated shape are also used mainly in applications involving a gas, for example, in an air purification system. PTL 1 discloses an example of use of a cylindrically shaped pleated filter as a filter device for removing sludge from a cutting fluid of a machine tool. Regarding this device, it is described that a filter device having a high filter-cleaning effect can be provided by ejecting a liquid toward an outer surface of the cylindrical filter while rotating the filter.

Meanwhile, treatment of ballast water carried in ships has become an issue in recent years. Ballast water is seawater carried in a ship to provide safe voyage even when the ship is empty of cargo. Various methods for removing, killing, or inactivating microbes by purifying ballast water have been developed. Methods using filtration for the purpose of removing relatively large microbes have also been developed. For example, PTL 2 describes a ballast water treatment apparatus using a filter membrane, the apparatus being filed by the applicant of the present invention.

### Citation List

### Patent Literature

PTL 1: Japanese Unexamined Patent Application Publication No. 2008-93783
PTL 2: Japanese Patent No. 4835785

### Summary of Invention

### Technical Problem

In the case of seawater desalination, the use of brackish water/seawater for purposes such as ballast water, or the treatment of sewage water, human sewage, industrial wastewater, or the like, a preliminary filtration treatment for removing foreign matter, contaminants, and microbes in water is necessary. The inventors of the present application have been examining the application of a pleated filter to such filtration. In this case, it is necessary to filter a large amount of water in the shortest possible time. However, in general, the operation at a large scale/high flow rate causes a technical problem in that a decrease in the amount of treatment or the filtration function due to clogging at an early stage is easily caused.

The apparatus disclosed in PTL 2 includes a filtering device in which a cylindrical filter is installed in a tubular case and a liquid flowing from the outside to the inside of the cylindrical filter is collected as a filtrate. In the filtering device disclosed in PTL 2, a liquid to be filtered is ejected from a nozzle provided on a side face of the tubular case onto a part of a filtering surface of the filter, thereby cleaning filtered products deposited on a surface of the filter to recover the permeation flux, and the filtered products that have been washed out are discharged from a filtration front chamber. With this structure, a stable filtration state is continuously maintained. An important factor for stably maintaining continuous filtration of such a system is the cleaning effect obtained by ejecting, onto the filtering surface of the filter, the liquid to be filtered. In the filtering device disclosed in PTL 2, in order to efficiently and effectively clean the entire filter by changing a cleaning region of the filter with time, the cylindrical filter is rotated during filtration by driving a motor or the like, thus continuously and periodically changing the position to which the ejection from the ejection nozzle is applied.

In order to reliably perform this rotation cleaning and to stably maintain a high filtration flow rate, it is necessary to maintain the ejection of the liquid to be filtered from the nozzle at a certain degree of flow rate level or higher. According to the studies conducted by the inventors, it was found that, as a result of being subjected to an ejection of the liquid to be filtered at such a high flow rate, the cylindrical filter degrades with time and breaks, and part of the liquid to be filtered may be mixed directly with the filtrate without passing through the filter.

In view of this, an object of the present invention is to provide a filtering device that can be operated stably for a long period of time while maintaining a high cleaning effect, and a ballast water treatment apparatus using the filtering device.

### Solution to Problem

A filtering device according to the present invention includes, as a filter membrane, a pleated filter formed of a filter base having folds so as to repeat peak portions and valley portions, the pleated filter having a shape of a cylinder whose axial direction is a ridge line direction of the folds. In the filtering device, the pleated filter is rotatable about a cylindrical axis of the shape of the cylinder. The filtering device includes a nozzle that is provided so as to face an outer circumferential surface of the pleated filter and that ejects a liquid toward the outer circumferential surface. The relationships 4p ≤ W, and h/5 ≤ L ≤ h/2 are satisfied, where p represents a spacing between pleats and h represents a length in the ridge line direction, the length being effective for filtration, in the folds on the outer circumferential side of the pleated filter, and W represents an opening width in a direction perpendicular to the ridge line direction and L represents an opening length in the ridge line direction in an opening portion of the nozzle.

The present invention also provides a ballast water treatment apparatus including, as a filter membrane, a pleated filter formed of a filter base having folds so as to repeat peak portions and valley portions, the pleated filter having a shape of a cylinder whose axial direction is a ridge line direction of the folds. In the ballast water treatment apparatus, the pleated filter is rotatable about a cylindrical axis of the shape of the cylinder. The ballast water treatment apparatus includes an untreated-water nozzle that is provided so as to face an outer circumferential surface of the pleated filter and that ejects a liquid toward the outer circumferential surface. The relationships 4p ≤ W, and h/5 ≤ L ≤ h/2 are satisfied, where p represents a spacing between pleats and h represents a length in the ridge line direction, the length being effective for filtration, in the folds on the outer circumferential side of the pleated filter, and W represents an opening width in a direction perpendicular to the ridge line direction and L represents an opening length in the ridge line direction in an opening portion of the untreated-water nozzle. A top surface of the cylinder and a bottom surface of the cylinder of the pleated filter are each sealed in a watertight manner. The ballast water treatment apparatus includes a case that includes an outer cylindrical portion provided so as to surround the pleated filter and including a nozzle opening of the untreated-water nozzle therein, a filtered water flow path that leads filtered water having passed through the pleated filter from the inside of the cylinder of the pleated filter to the outside of the case, and a discharge flow path that discharges discharge water that is not filtered by the pleated filter to the outside of the case.

The present invention also provides a method for treating ballast water, the method including installing the above ballast water treatment apparatus in a hull, using, as untreated water, seawater taken from the outside of the hull, further applying a sterilization treatment to filtered water treated by the ballast water treatment apparatus, and subsequently storing the resulting water in the hull as ballast water.

### Advantageous Effects of Invention

According to the above, it is possible to provide a filtering device that can be operated stably for a long period of time while maintaining a high cleaning effect, a ballast water treatment method, and a ballast water treatment apparatus using the filtering device.

### Brief Description of Drawings

[Fig. 1] Figure 1 is a perspective schematic view illustrating a typical example of the structure of a pleated filter.
[Fig. 2] Figure 2 is an enlarged schematic view of a part of the pleated filter in Fig. 1, the view illustrating the relationship with an untreated liquid.
[Fig. 3A] Figure 3A is a view illustrating a part of the pleated filter in Fig. 1, viewed from a side face of the pleated filter.
[Fig. 3B] Figure 3B is a view illustrating an example of a state where breakage occurs in the pleated filter in Fig. 3A.
[Fig. 4] Figure 4 is a perspective schematic view illustrating an example of the structure of a pleated filter including a reinforcing sheet, according to an embodiment of the present invention.
[Fig. 5] Figure 5 is a perspective view illustrating the structure of a mesh sheet which is an example of a reinforcing sheet.
[Fig. 6A] Figure 6A is a view illustrating an example of a ballast water treatment apparatus according to an embodiment of the present invention and is a sectional schematic view illustrating the structure of a vertical section including an axis line.
[Fig. 6B] Figure 6B is a schematic view illustrating the structure of a horizontal A-A section in Fig. 6A.
[Fig. 7] Figure 7 includes schematic views illustrating the relationship between a nozzle opening portion and a pleated filter, part A illustrates a sectional state near a central portion of a pleated filter in the height direction, and part B illustrates a state when the pleated filter is viewed from a side face.
[Fig. 8] Figure 8 includes views illustrating a state where, in Fig. 7, cleaning water flows from a nozzle into a space between pleats, part A illustrates a sectional state near a central portion of a pleated filter in the height direction, and part B illustrates a state when the pleated filter is viewed from a side face.
[Fig. 9] Figure 9 includes views illustrating a state where, in Fig. 7, cleaning water flows from a nozzle into a space between pleats and is a view illustrating a state where a pleated filter is rotated by one peak in a rotation direction with respect to the state illustrated in Fig. 8. Part A illustrates a sectional state near a central portion of the pleated filter in the height direction, and part B illustrates a state when the pleated filter is viewed from a side face.
[Fig. 10] Figure 10 includes schematic views illustrating the relationship between a pleated filter and a nozzle opening portion having a size different from the nozzle opening portion in Fig. 7, part A illustrates a sectional state near a central portion of the pleated filter in the height direction, and part B illustrates a state when the pleated filter is viewed from a side face.
[Fig. 11] Figure 11 includes views illustrating a state where, in Fig. 10, cleaning water flows from a nozzle into spaces between pleats, part A illustrates a sectional state near a central portion of a pleated filter in the height direction, and part B illustrates a state when the pleated filter is viewed from a side face.
[Fig. 12] Figure 12 is a block diagram illustrating an example of the overall structure of a ballast water treatment system using a ballast water treatment apparatus according to an embodiment of the present invention.

### Reference Signs List

- 2: reinforcing sheet
- 10, 101, 51: pleated filter
- 11: filter base
- 21: pump
- 22: filtering device
- 23: sterilization device
- 24: tank
- 31,32,33,34,35,36: pipe
- 50, 52: nozzle opening portion
- 102: untreated-water nozzle
- 103: case
- 106: untreated water flow path
- 107: filtered water flow path
- 108: discharge flow path
- 121: nozzle opening
- 131: outer cylindrical portion
- 132: lid portion
- 133: bottom portion
- 140: central pipe
- 141: water intake hole
- 190: motor
- 191: motor cover
- a: pleat
- b: pleat
- c: pleat
- d: pleat
- e: pleat
- f: pleat
- g: pleat
- h: pleat
- i: pleat
- j: pleat
- P: pressure
- V: inner end
- M: outer end
- D: substantially central portion of filter
- W: opening width
- L: opening length
- p: spacing pitch between pleats
- h: pleat length in ridge line direction

### Description of Embodiments

### [Description of embodiments of present invention]

The inventors of the present invention conducted intensive studies on degradation of a pleated filter and confirmed that breakage easily occurs in folded portions corresponding to peaks and valleys of pleats. As measures against this, the inventors of the present invention have been examining a reinforced structure in which the folded portions of pleats do not easily break. With the reinforcement of a pleated filter, while the occurrence of breakage is suppressed, clogging may easily occur. In view of this, the inventors of the present invention developed a structure in which clogging can be suppressed by increasing a cleaning effect even in the case of a reinforced filter.

Embodiments of the present invention will be listed and described.
(1) An embodiment of the present invention provides a filtering device including, as a filter membrane, a pleated filter formed of a filter base having folds so as to repeat peak portions and valley portions, the pleated filter having a shape of a cylinder whose axial direction is a ridge line direction of the folds. In the filtering device, the pleated filter is rotatable about a cylindrical axis of the shape of the cylinder. The filtering device includes a nozzle that is provided so as to face an outer circumferential surface of the pleated filter and that ejects a liquid toward the outer circumferential surface. The relationships 4p ≤ W, and h/5 ≤ L ≤ h/2 are satisfied, where p represents a spacing between pleats and h represents a length in the ridge line direction, the length being effective for filtration, in the folds on the outer circumferential side of the pleated filter, and W represents an opening width in a direction perpendicular to the ridge line direction and L represents an opening length in the ridge line direction in an opening portion of the nozzle.
   In the structure in which a pleated filter is cleaned by ejecting a cleaning liquid toward an outer circumferential surface of the rotating pleated filter, the above embodiment provides a structure for obtaining a higher cleaning effect. In the filtering device, a nozzle for supplying a liquid to be filtered and a nozzle for supplying a cleaning liquid may be separately provided. Alternatively, a nozzle for supplying a liquid to be filtered may also have a function of cleaning. In the description below, any nozzle in each of the above cases may be used as long as the nozzle has a cleaning function. The superiority of this cleaning effect was obtained on the basis of the finding regarding a cleaning mechanism examined by the inventors as described below. By increasing the opening width W of the nozzle with respect to the spacing p between pleats in folds on the outer circumferential side of a pleated filter, the cleaning liquid can flow into a plurality of valley portions of pleats at the same time instead of flowing into a single valley portion of a pleat. Satisfying the condition of 4p ≤ W means that, in any state of the rotating pleated filter, a cleaning liquid flows in at least three adjacent valley portions of pleats at the same time. In this state, a high cleaning effect is obtained. Furthermore, satisfying the relationship h/5 ≤ L ≤ h/2 where h represents a length of the pleated filter in the ridge line direction, the length being effective for filtration, and L represents an opening length of the nozzle means that the cleaning liquid from the nozzle does not flow in an entire valley portion of a pleat but flows only in a part of the valley portion. Since the cleaning liquid that has flowed in flows out from a portion that does not face the nozzle, the portion being a part of the valley portion of a pleat, the cleaning effect can be enhanced.
(2) A central portion of the nozzle in the direction of the opening length is preferably disposed at a position facing a central portion of the pleated filter in the ridge line direction. This is because the cleaning liquid flows from the central portion of the pleated filter, and flows to both end sides and thus easily flows out. A high cleaning effect can be obtained compared with the case where the nozzle is allowed to face an end of the pleated filter.
(3) The nozzle is preferably a rectangular nozzle having the opening width represented by W and the opening length represented by L. In the description above, the shape of the nozzle is not particularly limited, and various shapes can be used. Examples thereof include a rectangle, a substantially rectangular shape formed by rounding angles of a rectangle, an athletic track field-like shape formed by replacing ends of a rectangle with circular arcs, an ellipse, and a shape formed by connecting a plurality of circles. In any case, the opening width W is defined as a maximum width of the opening in a direction orthogonal to the ridge lines of folds of pleats, and the opening length is defined as a maximum length of the opening in a direction of folds of pleats. A rectangular nozzle that covers a substantially rectangular shape formed by rounding angles of a rectangle is preferable. The reason for this is as follows. Herein, the term "rectangular nozzle" covers a nozzle having a rectangular shape and a nozzle having a substantially rectangular shape. Specifically, the rectangular nozzle has a width that is substantially uniform over the entire length of the nozzle. Accordingly, when a cleaning liquid is ejected onto the pleats, uneven deformation of the pleats does not easily occur, and a stable cleaning effect is obtained. Furthermore, a rectangle is suitable for the shape of the nozzle also from the viewpoint of the ease of the device production.
(4) The present invention further provides a ballast water treatment apparatus using the filtering device described above. More specifically, the ballast water treatment apparatus includes, as a filter membrane, a pleated filter formed of a filter base having folds so as to repeat peak portions and valley portions, the pleated filter having a shape of a cylinder whose axial direction is a ridge line direction of the folds. In the ballast water treatment apparatus, the pleated filter is rotatable about a cylindrical axis of the shape of the cylinder. The ballast water treatment apparatus includes an untreated-water nozzle that is provided so as to face an outer circumferential surface of the pleated filter and that ejects a liquid toward the outer circumferential surface. The relationships 4p ≤ W, and h/5 ≤ L ≤ h/2 are satisfied, where p represents a spacing between pleats and h represents a length in the ridge line direction, the length being effective for filtration, in the folds on the outer circumferential side of the pleated filter, and W represents an opening width in a direction perpendicular to the ridge line direction and L represents an opening length in the ridge line direction in an opening portion of the untreated-water nozzle. A top surface of the cylinder and a bottom surface of the cylinder of the pleated filter are each sealed in a watertight manner. The ballast water treatment apparatus includes a case that includes an outer cylindrical portion provided so as to surround the pleated filter and including a nozzle opening of the untreated-water nozzle therein, a filtered water flow path that leads filtered water having passed through the pleated filter from the inside of the cylinder of the pleated filter to the outside of the case, and a discharge flow path that discharges discharge water that is not filtered by the pleated filter to the outside of the case. According to this ballast water treatment apparatus, even when a filtration treatment of a large amount of seawater is performed, the apparatus can be stably operated for a long period of time while maintaining a high cleaning effect.
(5) The present invention further provides, as a method for using the filtering device, a method for treating ballast water, the method including installing the above ballast water treatment apparatus in a hull, using, as untreated water, seawater taken from the outside of the hull, further applying a sterilization treatment to filtered water treated by the ballast water treatment apparatus, and subsequently storing the resulting water in the hull as ballast water. A filtration treatment can be stably performed for a long period of time while suppressing the occurrence of clogging as compared with existing methods. Consequently, the labor cost of maintenance and the cost of materials to be exchanged can be reduced, and the production of ballast water can be further facilitated.

### [Details of embodiments of present invention]

Embodiments of the present invention will now be described in detail with reference to the drawings. The scope of the present invention is not limited to these exemplifications but is defined by the claims described below. It is intended that the scope of the present invention includes equivalents of the claims and all modifications within the scope of the claims.

### (Structure of pleated filter)

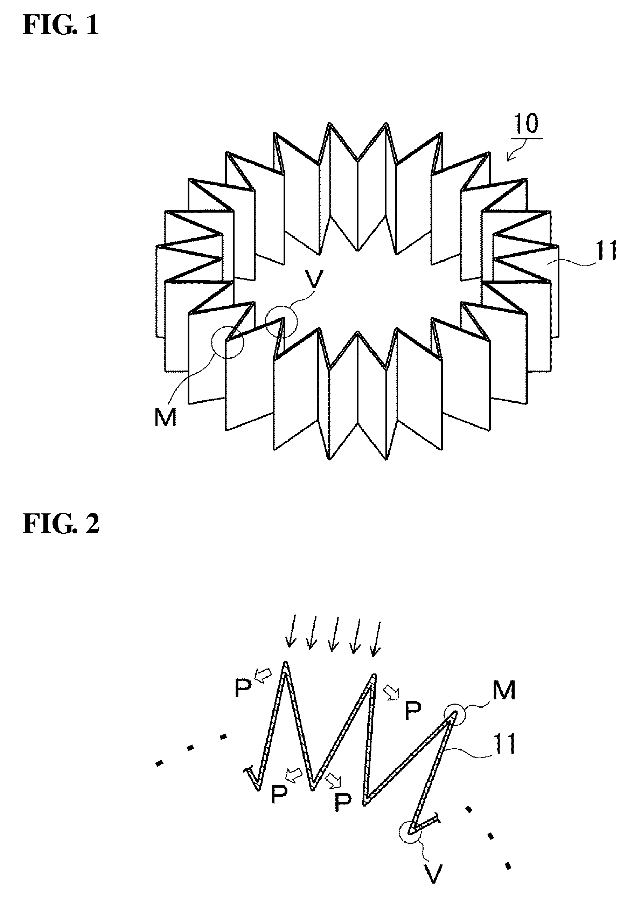

Figure 1 schematically illustrates a typical example of the structure of a pleated filter. A pleated filter 10 in Fig. 1 is obtained by forming a pleated shape by repeatedly folding a sheet-like filter base 11 so as to have alternating peaks and valleys, and further connecting both ends thereof to have a cylindrical shape as a whole. When the filter 10 is practically used, an upper surface and a lower surface of the cylinder are sealed with other members, and the shape of the filter 10 is fixed by the other members. Filtration is performed from the inside of the cylindrical filter to the outside thereof or reversely from the outside of the cylindrical filter to the inside thereof. In the description below of the present invention, a portion V in the figure, which is a fold projecting to the inside of the cylinder, is referred to as an "inner end", and a portion M in the figure, which is a fold projecting to the outside of the cylinder, is referred to as an "outer end". A valley portion viewed from the inside of the cylinder represents a space between portions V and on the back side of a portion M. It is to be noted that Fig. 1 illustrates a pleated shape schematically, and actual folds do not have an ideal acute angle as illustrated in the figure. This point will be described later.

A porous resin sheet is used as the base of the filter. Examples of the base that can be used include porous structures such as a stretched porous body, a porous body by phase separation, and a non-woven cloth that are composed of a material such as polyester, nylon, polyethylene, polypropylene, polyurethane, polytetrafluoroethylene (PTFE), or polyvinylidene fluoride (PVdF). For the purpose of a treatment at a high flow rate, a non-woven cloth composed of a polyester such as polyethylene terephthalate is particularly suitably used as the base of the filter.

A structure is assumed in which a liquid to be filtered is supplied from the outer circumferential side of the cylinder of the pleated filter 10 having the shape illustrated in Fig. 1 and is filtered to the inside of the cylinder. Figure 2 is a view illustrating forces applied to the filter base 11 in such a case. In Fig. 2, the five aligned arrows indicate a direction in which the untreated liquid is supplied from the outer end M side. Forces P are applied to the filter base 11 in a direction in which pleats are opened. Furthermore, the pressures P applied are changed by variations in the flow rate and the pressure of the untreated liquid and act on the filter base 11 as vibrations and repetitive bending depending on the structure.

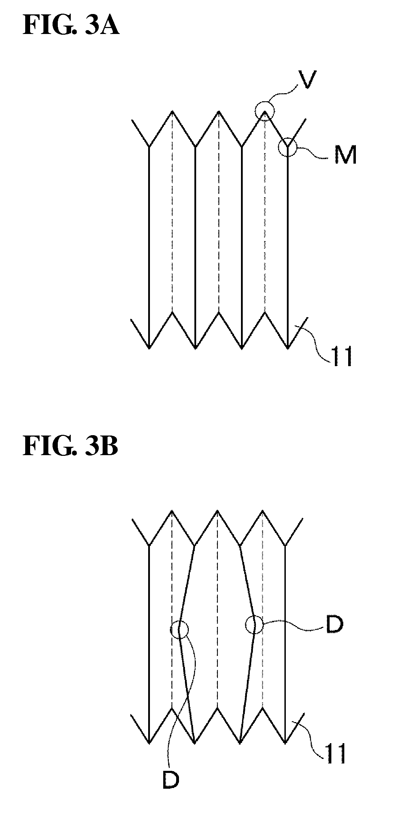

Figures 3A and 3B illustrate an example of the occurrence of breakage in a pleated filter caused by the pressures P described above. Figure 3A schematically illustrates a state before the breakage occurs. Figure 3B schematically illustrates a state when the breakage occurs. The top and the bottom of the filter are fixed in order to fix the shape and to achieve sealing. Accordingly, by repeatedly applying the pressures in the directions in which the outer ends are opened as illustrated in Fig. 2, substantially central portions D of the filter are bent in the directions illustrated in Fig. 3B. As a result, cracking and tearing may occur in the portions D of the filter base 11, and the filtration function may be impaired. In particular, in the case where the liquid to be filtered is a liquid such as water, the pressures received by the filter are higher than those in the case of a gas such as air, and thus the filter is easily broken in the folded portions.

Opening (bending) of central portions of the filter in the directions illustrated in Fig. 3B is advantageous in that the untreated liquid is supplied to the inner part of the pleats, and the surface of the filter is easily cleaned by the flow of the liquid. However, the occurrence of breakage and the like caused by the bending must be prevented. In view of this, the inventors of the present invention have studied that the bending near central portions of a filter is suppressed by providing a reinforcing sheet on a valley portion viewed from the inside of the cylindrical shape, that is, on the back side of the outer end.

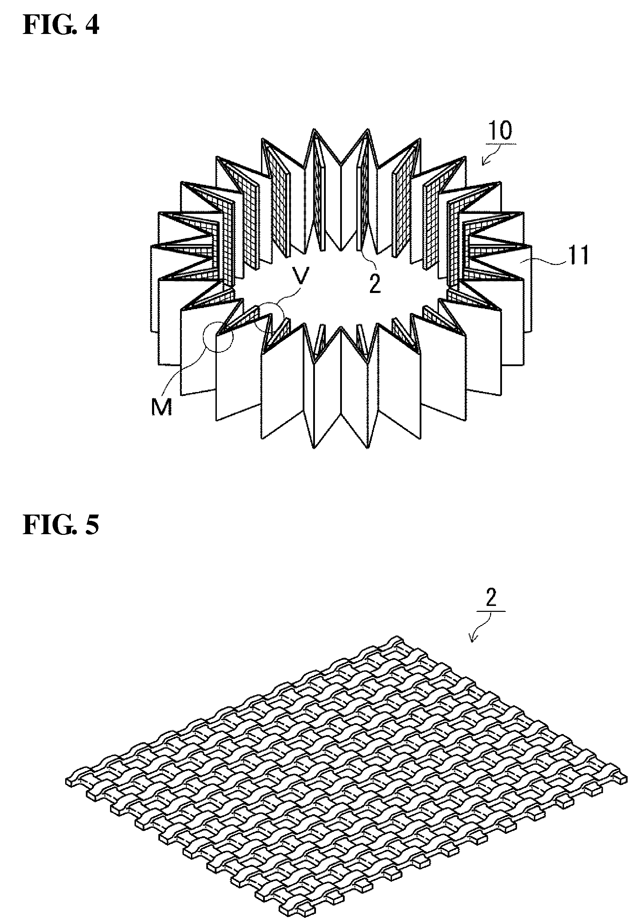

Figure 4 is a perspective view illustrating a structure of a pleated filter 10, which is a typical example of the structure described above. The pleated filter 10 includes a reinforcing sheet 2, which functions as a reinforcing member, on each valley portion viewed from the inside of a filter base 11. A sheet-like reinforcing sheet 2 is preferably attached to a portion near the center of adjacent portions V so as to extend to the back side of portions M functioning as outer ends. In this structure, the reinforcing sheet 2 is a member having a strength that prevents bending deformation of the filter. Furthermore, preferably, the reinforcing sheet 2 does not excessively prevent pleats of the filter from expanding by the pressure of an untreated liquid. Specifically, as illustrated in Fig. 3B, while the reinforcing sheet 2 prevents the filter from bending at an obtuse angle (to form a "dogleg" shape), the reinforcing sheet 2 is preferably bent into a gentle curve and preferably has a restoring force for returning to the original shape when released from the pressure by the untreated liquid. Although the reinforcing sheets 2 are illustrated in a non-fixed state in Fig. 4, the reinforcing sheets 2 are fixed together with the filter base 11 by a fixing member provided on an upper portion of the cylinder and a fixing member provided on a lower portion of the cylinder. The fixing members are disc-shaped or ringshaped members which are arranged on and under the cylinder, and, while fixing the shapes and the positions of the filter base 11 and the reinforcing sheets 2, which maintain water-tightness of the fixed portions. Preferably, the fixing members are fixed to the upper ends and the lower ends of the filter base 11 and the reinforcing sheets 2 with a resin serving as an adhesive therebetween.

The reinforcing sheet 2 is a sheet composed of a resin selected from the group consisting of polypropylene, polyethylene, polyamide, polyester, and vinyl chloride, and preferably has a large number of holes penetrating from a surface of the sheet to another surface thereof. Polypropylene is particularly preferable from the viewpoint of having a suitable strength and a suitable restoring force.

When the folds of the pleats are densely arranged, a flow of a filtered objective fluid to the inside of a cylindrical body is easily blocked. In the case where the reinforcing sheet 2 is a sheet that does not have holes or the like, the flow is significantly blocked, and the filtration performance may be impaired. Therefore, the reinforcing sheet 2 is preferably a so-called porous or mesh-like sheet. A size of the holes of about 0.5 to 8 mm (in the case of a mesh, a pitch of 1 to 10 mm) is preferably used from the viewpoint of the balance between permeation of the filtrate and the strength of the sheet. The size of the hole is more preferably 3 to 5 mm (in the case of a mesh, a pitch of 3 to 5 mm). The sheet thickness is selected in consideration of the pitch (spacing between adjacent folds) of the pleats and a desired strength. A sheet thickness of 0.3 to 2 mm is preferably used. The sheet thickness is more preferably 0.5 to 1.5 mm.

As a typical example of a member used as the reinforcing member, a mesh sheet is illustrated in Fig. 5. Figure 5 illustrates an example of a mesh sheet composed of a resin. The reinforcing effect is obtained by using even a simple sheet as a reinforcing sheet. However, the reinforcing sheet preferably has a large number of holes penetrating from a surface of the sheet to another surface of the sheet. This is because such a reinforcing sheet does not easily block a flow of a filtrate. Furthermore, when the reinforcing sheet has irregularities on surfaces thereof in addition to a large number of holes, as in the mesh sheet having irregularities and illustrated in Fig. 5, close contact between the reinforcing sheet and the filter base other than bonded portions can also be prevented. Besides a mesh-like sheet, a punched material obtained by forming a large number of holes in a sheet, a sheet having continuous holes with a three-dimensional network structure, and the like can also be used as the porous sheet.

### (Filtering device)

As a preferred application example of a filtering device including the pleated filter described above, a structure of a ballast water treatment apparatus will be specifically described with reference to drawings. A description will now be made using seawater as a typical example of a filtrate and a cleaning liquid, and thus the names such as filtered water, cleaning water, untreated water, etc. are used below. Not only in the case where the filtering device is used as a ballast water treatment apparatus, but also in other cases, a cleaning effect described below is similarly achieved.

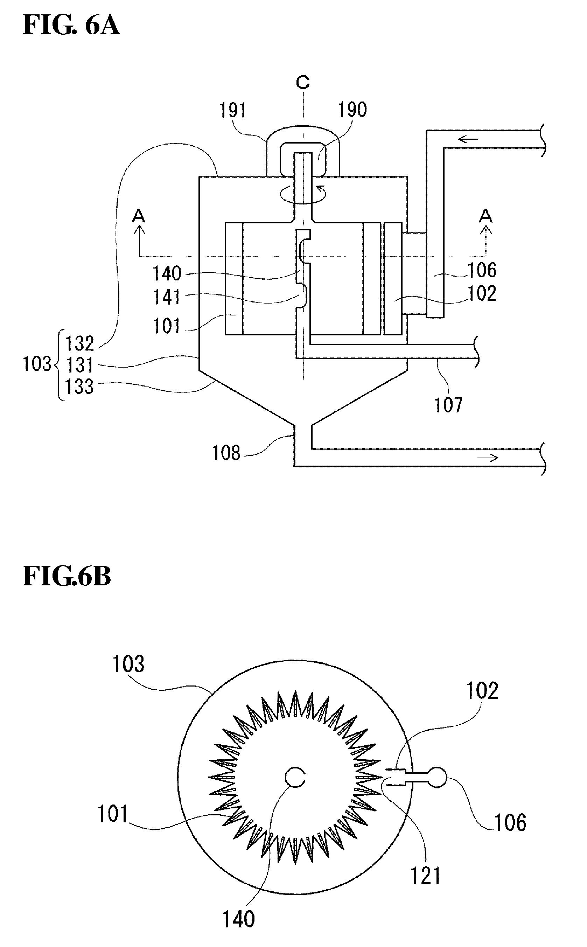

Figures 6A and 6B are views illustrating an example of an apparatus for treating ballast water for ships, according to an embodiment of the present invention. Figure 6A is a schematic view illustrating the structure of a vertical section including an axis line. Figure 6B is a schematic view illustrating the structure of a horizontal A-A section in Fig. 6A. A cylindrical pleated filter 101 is disposed about an axis line, which is the center of rotation, and is mounted to be rotatable about a central pipe 140 arranged in the center (the pipe does not rotate). Upper and lower surfaces of the pleated filter 101 are sealed in a watertight manner. The rotatable attachment structure also needs to have a watertight structure. However, the attachment structure is not particularly limited, and a known structure may be used. A case 103 is provided so as to cover the whole filter. The case 103 includes an outer cylindrical portion 131, a lid portion 132, and a bottom portion 133. A discharge flow path 108 is provided on the bottom portion 133. An untreated water flow path 106 and an untreated-water nozzle 102 are provided in order to introduce seawater as untreated water into the case 103. The untreated-water nozzle 102 is provided to extend from the untreated water flow path 106 so as to have a nozzle opening 121 thereof in the outer cylindrical portion 131 of the case 103, and is configured so that untreated water flows toward an outer circumferential surface of the pleated filter 101. A motor 190 is provided on the central axis of the pleated filter for the purpose of the rotation of the pleated filter 101. The motor 190 is housed in a motor cover 191 and is driven by an electric power supplied from a driving control unit (not shown).

In this embodiment, the untreated water ejected from the untreated-water nozzle 102 is applied to the outer circumferential surface of the pleats of the pleated filter 101, and an effect of cleaning the pleated filter 101 is obtained by the pressure of the untreated water. The untreated water that is not filtered and suspensoid settled in the case 103 are sequentially discharged from the discharge flow path 108 on the bottom portion 133 of the case 103. This point that filtration is performed while continuously and constantly discharging suspensoid and residual untreated water in this manner is also a feature of this apparatus. This feature is advantageous for reliably achieving a large amount of treatment of more than 100 ton/hour, which is required for ballast water. Although valves and the like are not illustrated in the discharge flow path 108 in the figure, devices necessary for maintenance and flow rate control are provided. The filtered water filtered by the pleated filter 101 is guided to a filtered water flow path 107 through a water intake hole 141 provided in the central pipe 140 in the filter, and is discharged to the outside of the case 103.

The nozzle opening 121 of the untreated-water nozzle 102 may have a rectangular opening. A large amount of water is ejected from the untreated-water nozzle 102 onto the pleated filter surface, thereby generating vibrations in directions in which folds of the pleated filter 101 are opened and closed. As a result, holes such as tearing are easily formed in the folds. In this embodiment, a case where a pleated filter includes a reinforcing sheet is described as an example. In order to obtain the cleaning effect described below, the reinforcing sheet is not essential.

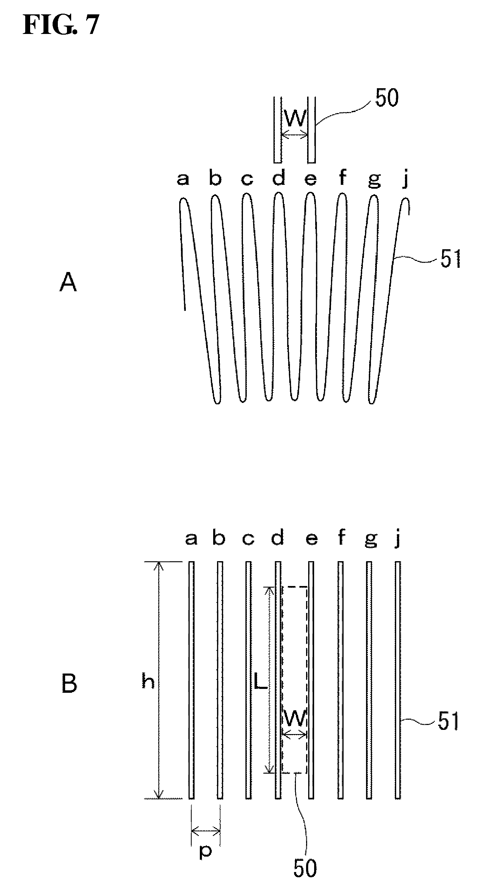

The relationship between a nozzle and a pleated filter in the embodiment described above will be described with reference to drawings. Figure 7 includes schematic views illustrating the relationship between a nozzle opening portion 50, which is an end of an untreated-water nozzle, and a pleated filter 51, and illustrates only a part of the pleated filter 51 forming a cylindrical shape as a whole. Part A of Fig. 7 schematically illustrates a part of a cross section formed by cutting, in a direction perpendicular to the cylindrical axis, the cylindrical pleated filter 51 along a line near the center thereof in the height direction. The side facing the nozzle opening portion is the outer circumferential side of the cylinder. In reality, the spacing between pleats on the outer circumferential side of the cylinder is larger than that on the inner circumferential side of the cylinder. The thickness of the filter base is omitted in the figure. Since the filter has a certain thickness and rigidity, each of the folds thereof does not form an acute angle and has a rounded shape. In order to increase the filtration area as a whole, the number of pleats is preferably large. For this purpose, the spacing between pleats is small, that is, adjacent pleats are very closely arranged. For the sake of description below, peak portions of the pleats are sequentially assigned symbols a to j. Part B of Fig. 7 illustrates a state when the pleated filter 51 is viewed from a side face. Specifically, part B of Fig. 7 illustrates a state where the outer circumferential surface of the pleated filter 51 is viewed from the direction of the nozzle opening portion 50 in part A of Fig. 7. For the sake of convenience, only mountain-fold portions of the pleats are shown by the solid line, and an opening position of the nozzle opening portion 50 is shown by the dotted line. Upper and lower ends of the pleated filter 51 are fixed at a uniform pitch p by fixing members (not shown). The distance between the upper fixing member and the lower fixing members is represented by h, thus determining the length h that is effective for filtration of the pleated filter 51. The nozzle opening portion 50 is typically a rectangular opening. The width of the nozzle opening portion 50 is represented by W, and the length thereof is represented by L. When the opening has a rounded shape, an effective maximum width of the nozzle opening portion 50 is defined as W, and an effective maximum length thereof is defined as L. This embodiment describes, as a typical example, a structure in which untreated water is also used as cleaning water. Accordingly, the term "nozzle" refers to an untreated-water nozzle. However, in the case where a cleaning water nozzle is separately provided, the following description is applied while the term "nozzle" is read as the cleaning water nozzle.

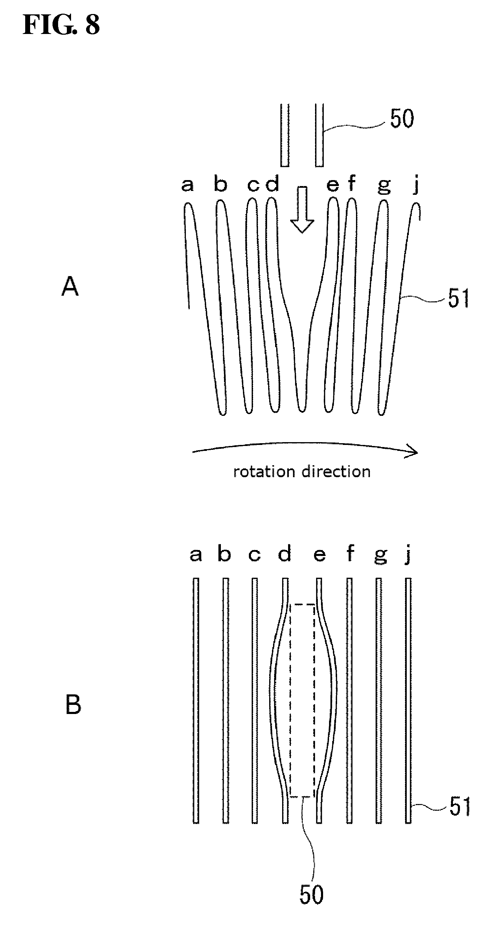

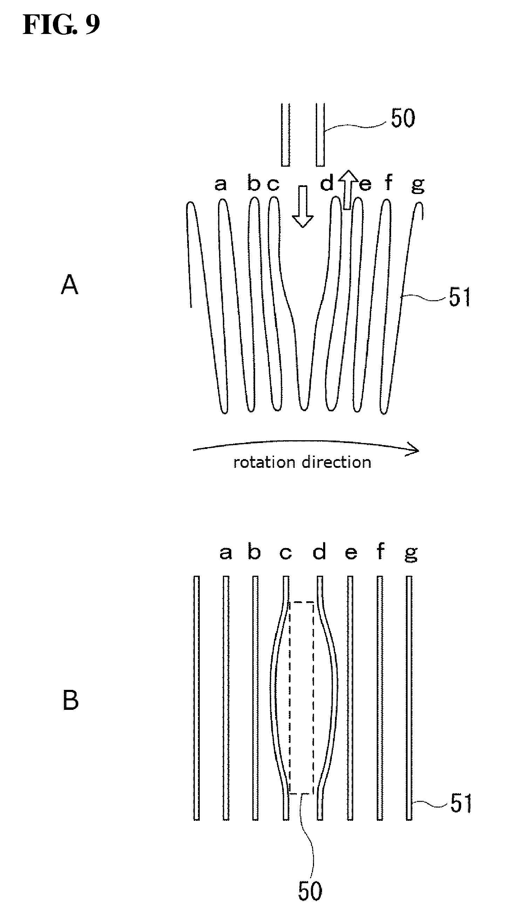

The principle of cleaning will be described with reference to Figs. 8 and 9. Figure 8 illustrates a state in which cleaning water flows from a nozzle opening portion 50 into a space between pleats d and e of a pleated filter 51. As indicated by the thick arrow in the figure, the pleats are expanded by cleaning water, and the cleaning water enters the space between the pleats (space between d and e in the figure). In part A of Fig. 8, the pleat d is expanded in the direction of the pleat c, and the pleat e is expanded in the direction of the pleat f. If the pleated filter 51 is stopped and a large amount of cleaning water is allowed to flow slowly, the pleats of the pleated filter 51 are sufficiently expanded up to the inner parts of the valley portions. In an actual apparatus, cleaning water (untreated water) is sequentially allowed to flow in a next space between pleats while the pleated filter is rotated. Accordingly, the time during which one pleat stays at the position facing the nozzle opening portion is short. Therefore, the pleated filter is continuously moved in the rotation direction while cleaning water enters a halfway position in the depth direction of the pleats. Similarly to Fig. 7, part B of Fig. 8 illustrates a state where the outer circumferential surface of the pleated filter 51 in part A of Fig. 8 is viewed from the direction of the nozzle opening portion 50. Part B of Fig. 8 illustrates a state where pleats that substantially face the nozzle are expanded to both sides because the upper and lower ends of the pleated filter 51 are fixed. As described above, in the state illustrated in Fig. 8, the space between the pleats d and e is expanded by cleaning water.

Figure 9 illustrates a state where the pleated filter 51 in Fig. 8 is moved by one pitch in a rotation direction. The relationship between part A and part B is the same as that in Fig. 8. The state where cleaning water flows in is the same as that in Fig. 8. However, in this case, the cleaning water flows into a space between the pleats c and d as indicated by the thick arrow. At this time, since the pleat d is expanded in the direction of the pleat e, the pleats are pressed in a direction in which the space between the pleats d and e becomes narrow. Consequently, the cleaning water that has flowed in the halfway position of the space between the pleats d and e in the depth direction of the pleats is pushed out in the direction indicated by the thick arrow between d and e in the figure. In this manner, the cleaning water that once flows into a space between the pleats is pushed out, thereby generating a flow on the surface of the pleated filter and realizing cleaning of the surface. In changing from the state in Fig. 8 to the state in Fig. 9 as a result of the rotation of the pleated filter 51, unless the cleaning water is sufficiently supplied to deep portions of the pleats, the entire outer circumferential surface of the pleated filter cannot be cleaned. In order to sufficiently supply cleaning water, it is necessary to reduce the rotation speed of the pleated filter with respect to the flow rate of the cleaning water supplied. This is contrary to an increase in the number of rotations for the purpose of performing a large amount of filtration. In addition, an excessive increase in the flow rate may result in breakage of the filter base, and thus there is a limit to the flow rate.

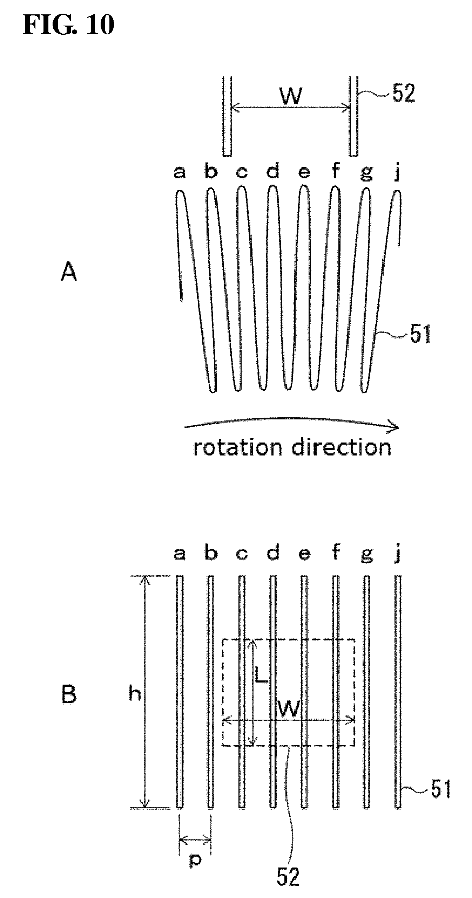

Figure 10 illustrates a structure in which a nozzle opening portion 52 having an opening size different from the nozzle opening portion in Fig. 7 is used. Similarly to Fig. 7, Fig. 10 illustrates only a part of a pleated filter 51 forming a cylindrical shape as a whole. Part A of Fig. 10 schematically illustrates a part of a cross section formed by cutting, in a direction perpendicular to the cylindrical axis, the cylindrical pleated filter 51 along a line near the center thereof in the height direction. The side facing the nozzle opening portion is the outer circumferential side of the cylinder. Similarly to Fig. 7, peak portions of the pleats are sequentially assigned symbols a to j. Part B of Fig. 10 illustrates a state when the pleated filter 51 is viewed from a side face. Specifically, part B of Fig. 10 illustrates a state where the outer circumferential surface of the pleated filter 51 is viewed from the nozzle side in part A of Fig. 10. For the sake of convenience, only mountain-fold portions of the pleats are shown by the solid line, and an opening position of the nozzle opening portion 52 is shown by the dotted line. Upper and lower ends of the pleated filter 51 are fixed at a uniform pitch p by fixing members (not shown). The distance between the upper fixing member and the lower fixing member is represented by h, thus determining the length h that is effective for filtration of the pleated filter 51. The nozzle opening portion 52 is typically a rectangular opening. The width of the nozzle opening portion 52 is represented by W and the length thereof is represented by L. When the opening has a rounded shape, an effective maximum width of the nozzle opening portion 52 is defined as W, and a maximum length thereof is defined as L. In Fig. 10, in order to illustrate a typical state where the relationship between the nozzle opening portion and a pleated filter satisfies W ≥ 4p and L ≤ h/2, the nozzle opening portion 52 is illustrated with dimensions of approximately W = 4p and L = h/2.

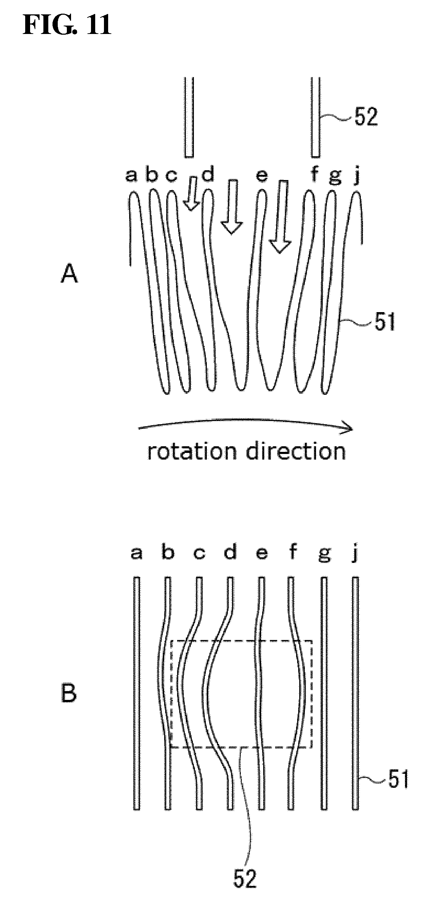

The state of cleaning different from that in Figs. 8 and 9 will be described with reference to Fig. 11. Figure 11 illustrates a state in which cleaning water flows from a nozzle opening portion 52 into spaces between a pleat c and a pleat g of a pleated filter 51. The pleated filter 51 is continuously rotated in a rotation direction. As indicated by the thick arrows in the figure, it is found that the cleaning water flows into spaces between the pleats, and the pleats are expanded. As a result of the expansion of the pleats, the spaces between pleats located on both sides of the expanded pleats are reduced. Unlike the state in Fig. 8 where the nozzle width is narrow, in part A of Fig. 11, since the width of the nozzle opening portion 52 is wide, the cleaning water flows into a plurality of spaces between pleats. With this structure, the cleaning water can sufficiently flow into inner valley portions between the pleats. This state is shown by the pleats d and e and the pleats e and f. The space between the pleats is then reduced by pressure as illustrated by the pleats f and g, and consequently, the cleaning water that has flowed in the space is pushed out. Thus, a high cleaning effect is obtained. Furthermore, in this embodiment, the nozzle height is determined to be short. Therefore, as illustrated in part B of Fig. 11, the cleaning water flows so as to be concentrated near the central portion of the pleated filter 51. A portion near the center of the pleated filter 51 is expanded, and in this state, the cleaning water does not flow in the vicinity of the upper and lower ends of the pleated filter 51. Therefore, the cleaning water can continuously flow out from the upper and lower end sides of the pleated filter 51. This effect is also obtained in relation to the width of the nozzle. Specifically, for example, the cleaning water that has flowed in the space between the pleats d and e further receives an inflow pressure of cleaning water even in the state where the pleats are subsequently rotated by one pitch (i.e., at the positions of the pleats e and f in the figure), unlike the case illustrated in Fig. 9 where the space between the pleats is immediately reduced by pressure and the cleaning water flows out. Accordingly, the cleaning water flows so as to escape to the upper and lower portions of the pleats, and can flow out from the upper and lower portions that do not face the nozzle. In this manner, by appropriately selecting the width and the length of the nozzle opening portion, a continuous flow of cleaning water is generated in the height direction of the pleated filter in addition to the flow generated by the opening and closing of the pleats described above. As a result, a higher cleaning effect is obtained.

In order to obtain this effect, the nozzle opening portion is preferably located at a position facing a central portion in the height direction (that is, in the ridge line direction of the folds) of the pleated filter 51. The central portion of the pleats is apart from the upper and lower fixed ends, and thus the pleats can be effectively expanded. Furthermore, the flow of the cleaning water disperses in the vertical direction, and a flow of cleaning is efficiently formed.

In order to obtain the cleaning effect described above, the relationships 4p ≤ W, and h/5 ≤ L ≤ h/2 are preferably satisfied where p represents a spacing between pleats, h represents a length in the ridge line direction, the length being effective for filtration, W represents an opening width of a nozzle, and L represents an opening length of the nozzle in the ridge line direction. The space between pleats is expanded to 2 to 3 times the original width p at a maximum. Accordingly, in order to receive a jet flow of cleaning water at a height of the center of the pleats even in a state where the adjacent pleats are expanded, the width of the nozzle opening portion is preferably at least 4 times the spacing between pleats or more. The width cannot be uselessly increased and is preferably 4 times or more and 5 times or less. The length of the nozzle opening portion is shorter than the length of pleats because paths through which cleaning water exits are necessary in the upper and lower portions of the opening. In order to efficiently discharge cleaning water, spaces each having a dimension of about 1/4 of the length of the pleats are preferably present in the upper and lower portions. Therefore, the length of the nozzle opening portion is preferably 1/2 or less of the length of the pleated filter. On the other hand, in order to introduce cleaning water in the pleats with a jet flow from the center, and to prevent the cleaning water introduced from the central portion from discharging from the center so that the cleaning water is discharged from the upper and lower portions, a length of about 1/5 of the length of the pleated filter is necessary. The length of the nozzle opening portion is preferably 1/2 or less and 1/4 or more.

### (EXAMPLE 1)

In order to confirm the effect obtained by a reinforcing sheet, filtration was performed using the ballast water treatment apparatus illustrated in Figs. 6A and 6B. A pleated filter 51 had an outer diameter of 680 mm, an effective length in the axial direction of 200 mm, a pleat depth of 70 mm, and the number of pleats of 450. The spacing p between pleats was calculated as 4.7 mm. Materials used were as follows.
Filter base: Polyethylene terephthalate non-woven cloth (trade name: AXTAR^{™} G2260-1S BK0, manufactured by Toray Industries, Inc.)
Reinforcing sheet: Polypropylene mesh sheet (trade name: TRICAL NET SN-598, manufactured by Takiron Co., Ltd.)

| | |
|---|---|
| Mesh pitch | 4.8 mm × 4.8 mm |
| Nominal thickness | 1.5 mm (warp 1.5 mm, weft 1.2 mm) |

In the apparatus, filtering operations were performed under the same conditions. The operation time until a differential pressure between the inside and the outside of the pleated filter was increased by 10 kPa compared with that at the beginning of the operation was compared. Filtration was performed using two types of rectangular nozzles. According to the results, in the nozzle having dimensions of width W x length L of 8 x 200 (mm), the operation time was 14 hours. On the other hand, in the nozzle having dimensions of width W x length L of 32 x 50 (mm), the operation time was longer, namely, 50 hours, and it was confirmed that the clogging did not easily occur.

### (EXAMPLE 2)

In order to confirm the effect obtained by a reinforcing sheet, filtration was performed using the ballast water treatment apparatus illustrated in Figs. 6A and 6B. A pleated filter 51 had an outer diameter of 790 mm, an effective length in the axial direction of 375 mm, a pleat depth of 70 mm, and the number of pleats of 517. The spacing p between pleats was calculated as 4.8 mm. Materials used were as follows.
Filter base: Polyethylene terephthalate non-woven cloth (trade name: AXTAR^{™} G2260-1S BK0, manufactured by Toray Industries, Inc.)
Reinforcing sheet: Polypropylene mesh sheet (trade name: TRICAL NET SN-598, manufactured by Takiron Co., Ltd.)

| | |
|---|---|
| Mesh pitch | 4.8 mm × 4.8 mm |
| Nominal thickness | 1.5 mm (warp 1.5 mm, weft 1.2 mm) |

In the apparatus, filtering operations were performed under the same conditions. The operation time until a differential pressure between the inside and the outside of the pleated filter was increased by 10 kPa compared with that at the beginning of the operation was compared. Filtration was performed using two types of rectangular nozzles. According to the results, in the nozzle having dimensions of width W x length L of 8 x 300 (mm), the operation time was 47 hours. On the other hand, in the nozzle having dimensions of width W x length L of 28 x 123 (mm), the operation time was longer, namely, 99 hours, and it was confirmed that the clogging did not easily occur.

### (System for treating ballast water for ships)

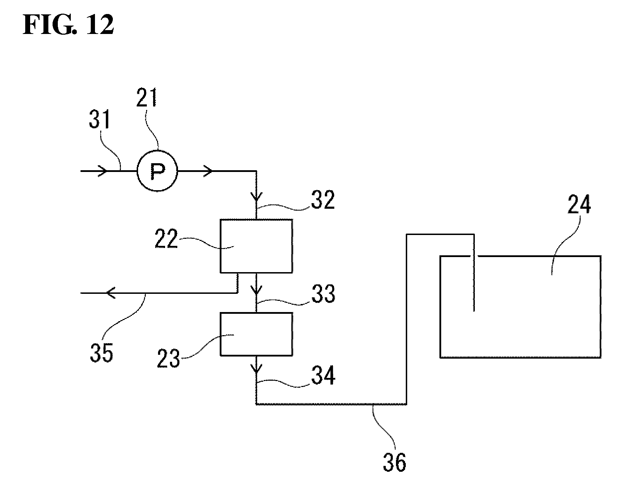

Figure 12 is an explanatory diagram that schematically illustrates the overall structure of a system for treating ballast water for ships, in which the ballast water treatment apparatus described above is used as a filtering device. In Fig. 12, untreated water, which is seawater taken from the ocean, is fed through a pipe 31 with a pump 21 and is supplied to a filtering device 22 through a pipe 32. Filtered water filtered in the filtering device 22 passes through a pipe 33 and is fed to a sterilization device 23 (which is not essential) such as an ultraviolet irradiation device or an electrolytic device. Discharge water that has not been filtered in the filtering device 22 is led to the outside of the device through a pipe 35. Seawater that has been subjected to a sterilization treatment is fed to a tank 24 through pipes 34 and 36.

### Industrial Applicability

The filtering device of the present invention can be suitably used for preliminary filtration treatment for removing foreign matter, contaminants, and microbes in water in the cases of seawater desalination, the use of brackish water/seawater for purposes such as ballast water, and the treatment of sewage water, human sewage, industrial waste water, or the like. Furthermore, the filtering device is suitable for the treatment of water having a high suspensoid/high SS content and a concentration treatment, and thus can also be used in the field of collection of valuable recyclable materials, for example, in the field of food.

## Claims

1. A filtering device comprising, as a filter membrane, a pleated filter formed of a filter base having folds so as to repeat peak portions and valley portions, the pleated filter having a shape of a cylinder whose axial direction is a ridge line direction of the folds,
wherein the pleated filter is rotatable about a cylindrical axis of the shape of the cylinder,
the filtering device includes a nozzle that is provided so as to face an outer circumferential surface of the pleated filter and that ejects a liquid toward the outer circumferential surface, and
the relationships 4p ≤ W, and h/5 ≤ L ≤ h/2 are satisfied,
where p represents a spacing between pleats and h represents a length in the ridge line direction, the length being effective for filtration, in the folds on the outer circumferential side of the pleated filter, and
W represents an opening width in a direction perpendicular to the ridge line direction and L represents an opening length in the ridge line direction in an opening portion of the nozzle.

2. The filtering device according to Claim 1, wherein a central portion of the nozzle in the direction of the opening length is disposed at a position facing a central portion of the pleated filter in the ridge line direction.

3. The filtering device according to Claim 1 or 2, wherein the nozzle is a rectangular nozzle having the opening width represented by W and the opening length represented by L.

4. A ballast water treatment apparatus comprising, as a filter membrane, a pleated filter formed of a filter base having folds so as to repeat peak portions and valley portions, the pleated filter having a shape of a cylinder whose axial direction is a ridge line direction of the folds,
wherein the pleated filter is rotatable about a cylindrical axis of the shape of the cylinder,
the ballast water treatment apparatus includes an untreated-water nozzle that is provided so as to face an outer circumferential surface of the pleated filter and that ejects a liquid toward the outer circumferential surface,
the relationships 4p ≤ W, and h/5 ≤ L ≤ h/2 are satisfied, where p represents a spacing between pleats and h represents a length in the ridge line direction, the length being effective for filtration, in the folds on the outer circumferential side of the pleated filter, and
W represents an opening width in a direction perpendicular to the ridge line direction and L represents an opening length in the ridge line direction in an opening portion of the untreated-water nozzle,
a top surface of the cylinder and a bottom surface of the cylinder of the pleated filter are each sealed in a watertight manner, and
the ballast water treatment apparatus includes
a case that includes an outer cylindrical portion provided so as to surround the pleated filter and including a nozzle opening of the untreated-water nozzle therein,
a filtered water flow path that leads filtered water having passed through the pleated filter from the inside of the cylinder of the pleated filter to the outside of the case, and
a discharge flow path that discharges discharge water that is not filtered by the pleated filter to the outside of the case.

5. A method for treating ballast water, the method comprising installing the ballast water treatment apparatus according to Claim 4 in a hull; using, as untreated water, seawater taken from the outside of the hull; further applying a sterilization treatment to filtered water treated by the ballast water treatment apparatus; and subsequently storing the resulting water in the hull as ballast water.
